# EUROPEAN PATENT APPLICATION

(11) **EP 4 137 951 A1**
(43) Date of publication of application: **22.02.2023**
(21) Application number: 21812976.5
(22) Date of filing: 30.04.2021
(51) Int. Cl.: G06F 12/02

(54) **STORAGE MEDIUM MANAGEMENT METHOD AND APPARATUS, AND DEVICE AND COMPUTER-READABLE STORAGE MEDIUM**

(30) Priority: 29.05.2020 CN 202010477603
(71) Applicant: Huawei Technologies Co., Ltd., Longgang District Shenzhen, Guangdong 518129 (CN)
(72) Inventor: YANG, Rui, Shenzhen, Guangdong 518129 (CN); TANG, Kun, Shenzhen, Guangdong 518129 (CN); XIE, Junhong, Shenzhen, Guangdong 518129 (CN); WANG, Sheng, Shenzhen, Guangdong 518129 (CN); QIN, Lang, Shenzhen, Guangdong 518129 (CN)
(74) Representative: Huawei European IPR
(86) International application number: PCT/CN2021/091768
(87) International publication number: WO 2021/238594

(57) **Abstract**

This application discloses a storage medium management method and apparatus, a device, and a computer-readable storage medium, and belongs to the field of data storage technologies. In this method, a controller receives an address space request, and provides, to an operating system, a first address space requested by the address space request, so that the first address space is directly managed by an operating system, without manual configuration or restart of an electronic device, to improve flexibility of storage medium management.

## Description

### TECHNICAL FIELD

This relates to the field of data storage technologies, and in particular, to a storage medium management method and apparatus, a device, and a computer-readable storage medium.

### BACKGROUND

With development of storage medium technologies, different types of storage media may be used as a hybrid memory to provide a data storage service for an electronic device. To enable the hybrid memory to better serve the electronic device, the electronic device may manage the hybrid memory. For example, the hybrid memory includes a non-volatile storage medium and a volatile storage medium. The non-volatile storage medium may be connected to an integrated memory controller (integrated memory controller, IMC) in a processor (central processing units, CPU) in the electronic device, and share a data transmission channel with the volatile storage medium.

Currently, a storage medium management process may be as follows: The non-volatile storage medium may support two operating modes: a memory mode (Memory Mode) and an application direct mode (application Direct Mode, App Direct Mode). In the memory mode, the volatile storage medium serves as a cache (cache) of the non-volatile storage medium, so that the CPU can access the non-volatile storage medium through the volatile storage medium. In addition, the IMC uniformly manages the non-volatile storage medium and the volatile storage medium, and presents the non-volatile storage medium to an operating system (operating system, OS) in the electronic device. However, the volatile storage medium is invisible to the operating system. In the application direct mode, the IMC performs uniform addressing on address spaces in the non-volatile storage medium and the volatile storage medium, and presents both the volatile storage medium and the non-volatile storage medium to the operating system, so that the volatile storage medium and the non-volatile storage medium are uniformly managed by the operating system. When an operating mode of the hybrid memory needs to be switched, the electronic device needs to be restarted and manual configuration needs to be performed, to complete the switching. Switching from the memory mode to the application direct mode is used as an example. A person skilled in the art may restart the electronic device, and enter a basic input/output system (basic input output system, BIOS) when the operating system is just started. The person skill in the art configures, in the BIOS, the operating mode of the hybrid memory from the memory mode to the application direct mode. The hybrid memory can operate in the application direct mode only after the restart is completed.

In the foregoing storage medium management process, during the switching of the management operating mode of the hybrid memory, manual configuration needs to be performed, and the electronic device also needs to be restarted. The switching process is tedious, causing inflexibility of managing the storage medium by the electronic device.

### SUMMARY

Embodiments of this application provide a storage medium management method and apparatus, a device, and a computer-readable storage medium, to improve flexibility of storage medium management. The technical solutions are as follows.

According to a first aspect, a storage medium management method is provided, applied to an electronic device. The electronic device includes a controller and two different types of storage media. The method includes:

The controller receives an address space request; the controller determines a first address space in a target storage medium based on the address space request; and the controller maps a physical address of the first address space to a target virtual address, where the target virtual address is managed by an operating system.

The address space request is used to indicate to provide an address space in the target storage medium for the operating system, and the target storage medium is a storage medium that is in the two different types of storage media and that matches the address space request.

In the method, the controller receives the address space request, and provides the first address space requested by the address space request for the operating system, so that the first address space is directly managed by the operating system, without manual configuration or restart of the electronic device, to improve flexibility of storage medium management.

In a possible implementation, before the controller maps the physical address of the first address space to the target virtual address, the method further includes:

The controller locks or invalidates the first address space.

In a possible implementation, that the controller invalidates the first address space includes:
when the first address space is a volatile address space, performing an invalidation operation on the first address space.

In a possible implementation, that the controller locks the first address space includes:
when the first address space is a non-volatile address space, determining, based on the physical address of the first address space, a second address space corresponding to the first address space, where the second address space belongs to a cache of the target storage medium; transferring data stored in the first address space to the second address space; and locking the second address space after the transfer is completed.

Based on the foregoing possible implementation, when the first address space is a non-volatile address space, the data stored in the first address space is transferred to a volatile storage medium, to avoid loss of the data stored in the first address space.

In a possible implementation, that the controller maps a physical address of the first address space to a target virtual address includes:
establishing a mapping relationship between the physical address of the first address space, the target virtual address, and a target identifier, where the target identifier is used to indicate that the target virtual address is managed by the operating system.

In a possible implementation, before the controller receives the address space request, the method further includes:

The controller generates a target virtual address interval, where the target virtual address interval includes a plurality of target virtual addresses.

In a possible implementation, the method further includes:

The controller receives a restoration request; the controller determines, based on the restoration request and a mapping relationship between a target virtual address and a physical address of an address space, a target physical address corresponding to a first target virtual address; and the controller deletes a mapping relationship between the target physical address and the first target virtual address.

The restoration request is used to indicate to restore, to the controller for management, an address space that corresponds to the first target virtual address and that is managed by the operating system. The address space is located in at least one of the different types of storage media.

In a possible implementation, before the controller deletes the mapping relationship between the target physical address and the first target virtual address, the method further includes:

The controller unlocks or de-invalidates a third address space corresponding to the target physical address.

In a possible implementation, that the controller de-invalidates a third address space corresponding to the target physical address includes:
when the third address space is a volatile address space, performing a de-invalidation operation on the third address space.

In a possible implementation, that the controller unlocks a third address space corresponding to the target physical address includes:
when the third address space is a non-volatile address space, determining, based on a physical address of the third address space, a fourth address space corresponding to the third address space; and unlocking the fourth address space, where the fourth address space belongs to a cache of a storage medium in which the third address space is located.

In a possible implementation, the address space request includes an attribute requirement and/or a data volume requirement of the operating system for a to-be-provided address space; and when the target storage medium meets the requirement in the address space request, the target storage medium matches the address space request.

In a possible implementation, the physical address and the virtual address each represent an address range.

According to a second aspect, a storage medium management method is provided, applied to an electronic device. The electronic device includes a controller and two different types of storage media. The method includes:

The controller receives a restoration request; the controller determines, based on the restoration request and a mapping relationship between a target virtual address and a physical address of an address space, a target physical address corresponding to a first target virtual address; and the controller deletes a mapping relationship between the target physical address and the first target virtual address.

The restoration request is used to indicate to restore, to the controller for management, an address space that corresponds to the first target virtual address and that is managed by the operating system. The address space is located in at least one of the different types of storage media.

In the method, the controller receives the restoration request, and deletes the mapping relationship between the target physical address and the first target virtual address based on the restoration request, to restore, to the controller for management, an address space corresponding to the target physical address, without manual configuration or restart of the electronic device, to improve flexibility of storage medium management.

In a possible implementation, before the controller deletes the mapping relationship between the target physical address and the first target virtual address, the method further includes:

The controller unlocks or de-invalidates a third address space corresponding to the target physical address.

In a possible implementation, that the controller de-invalidates a third address space corresponding to the target physical address includes:
when the third address space is a volatile address space, performing a de-invalidation operation on the third address space.

In a possible implementation, that the controller unlocks a third address space corresponding to the target physical address includes:
when the third address space is a non-volatile address space, determining, based on a physical address of the third address space, a fourth address space corresponding to the third address space, where the fourth address space belongs to a cache of a storage medium in which the third address space is located; and
unlocking the fourth address space.

According to a third aspect, a storage medium management apparatus is provided, configured to perform the foregoing storage medium management method. Specifically, the storage medium management apparatus includes function modules configured to perform the storage medium management method provided in any one of the first aspect or the optional manners of the first aspect.

According to a fourth aspect, a storage medium management apparatus is provided, configured to perform the foregoing storage medium management method. Specifically, the storage medium management apparatus includes function modules configured to perform the storage medium management method provided in any one of the second aspect or the optional manners of the second aspect.

According to a fifth aspect, an electronic device is provided. The electronic device includes a processor and a memory. The memory stores at least one instruction. The instruction is loaded and executed by the processor to implement an operation performed in the foregoing storage medium management method.

According to a sixth aspect, a computer-readable storage medium is provided. The storage medium stores at least one instruction. The instruction is loaded and executed by a processor to implement an operation performed in the foregoing storage medium management method.

### BRIEF DESCRIPTION OF DRAWINGS

To describe the technical solutions in embodiments of this application more clearly, the following briefly describes the accompanying drawings for describing embodiments. It is clear that the accompanying drawings in the following description show merely some embodiments of this application, and a person of ordinary skill in the art may still derive other drawings from these accompanying drawings without creative efforts.
FIG. 1 is a schematic diagram of managing a storage medium in a memory mode in the conventional technology;
FIG. 2 is a schematic diagram of managing a storage medium in an application direct mode in the conventional technology;
FIG. 3 is a schematic diagram of a structure of an electronic device according to an embodiment of this application;
FIG. 4 is a schematic diagram of a structure of an electronic device according to an embodiment of this application;
FIG. 5 is a flowchart of a storage medium management method according to an embodiment of this application;
FIG. 6 is a schematic diagram of providing, by a controller, a volatile address space for an operating system according to an embodiment of this application;
FIG. 7 is a schematic diagram of providing, by a controller, a non-volatile address space for an operating system according to an embodiment of this application;
FIG. 8 is a flowchart of a storage medium management method according to an embodiment of this application;
FIG. 9 is a schematic diagram of a structure of a storage medium management apparatus according to an embodiment of this application; and
FIG. 10 is a schematic diagram of a structure of a storage medium management apparatus according to an embodiment of this application.

### DESCRIPTION OF EMBODIMENTS

To make the objectives, technical solutions, and advantages of this application clearer, the following further describes the implementations of this application in detail with reference to the accompanying drawings.

For any storage medium, the storage medium corresponds to a physical address space. The physical address space may include a plurality of physical addresses, and each physical address corresponds to an address space in the storage medium. Sizes of address spaces corresponding to the plurality of physical addresses may be different or the same. When a hybrid memory in an electronic device includes a non-volatile storage medium and a volatile storage medium, currently, manners of managing the storage medium by the electronic device may include the following manners 1 and 2.

Manner 1: The electronic device manages the storage medium in a memory mode.

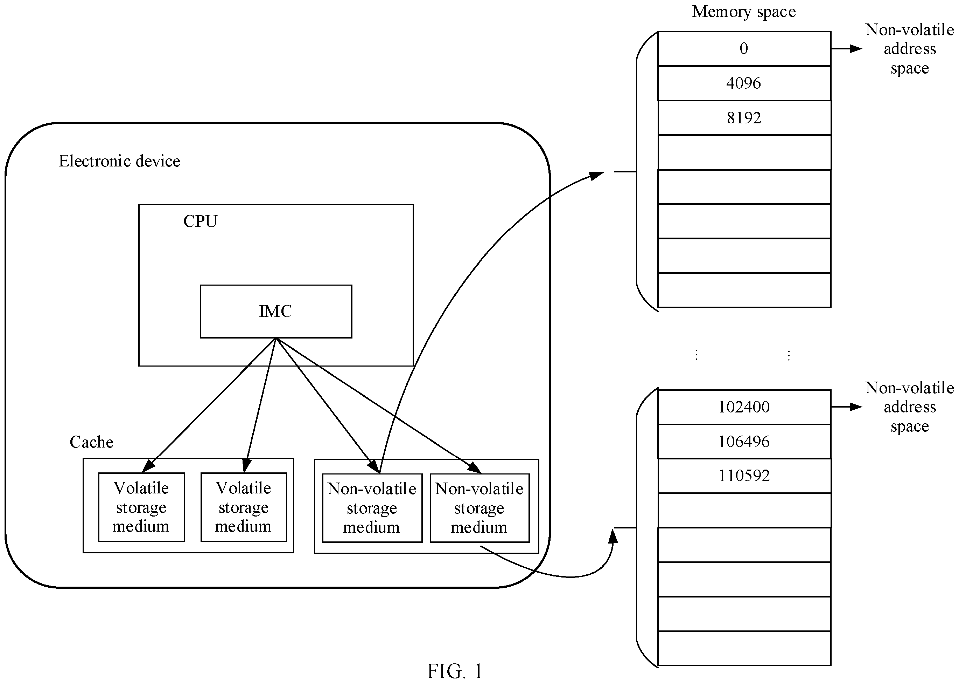

FIG. 1 is a schematic diagram of managing a storage medium in a memory mode in the conventional technology. As shown in FIG. 1, in the memory mode, a volatile storage medium serves as a cache of a non-volatile storage medium. For data that is stored in the non-volatile storage medium and that is frequently accessed by a CPU, the volatile storage medium may also store the data, so that the CPU can subsequently directly obtain the data from the volatile storage medium, without obtaining the data from the non-volatile storage medium a plurality of times. The non-volatile storage medium is configured to provide a memory space for an application, to store service data generated when the application executes a service. The memory space provided by the non-volatile storage medium may include a plurality of non-volatile address spaces. An IMC in the CPU may perform uniform addressing on the plurality of non-volatile address spaces by using a first virtual address interval. The first virtual address interval may include a plurality of first virtual addresses. The IMC may establish a mapping relationship between a physical address of each non-volatile address space and a first virtual address, so that each non-volatile address space corresponds to one first virtual address, to implement uniform addressing on the plurality of non-volatile address spaces. FIG. 1 is used as an example. Three non-volatile address spaces of a non-volatile storage medium respectively correspond to first virtual addresses 0, 4096, and 8192. Three non-volatile address spaces of another non-volatile storage medium respectively correspond to first virtual addresses 102400, 106496, and 110592. The IMC may send the first virtual address that has the mapping relationship with the non-volatile address space to an operating system on the electronic device, to present the memory space provided by the non-volatile storage medium for the operating system, so that the operating system can present the memory space to a kernel of the operating system, and the kernel then allocates the memory space presented by the operating system to the application.

Manner 2: A node device manages the storage medium in an application access mode.

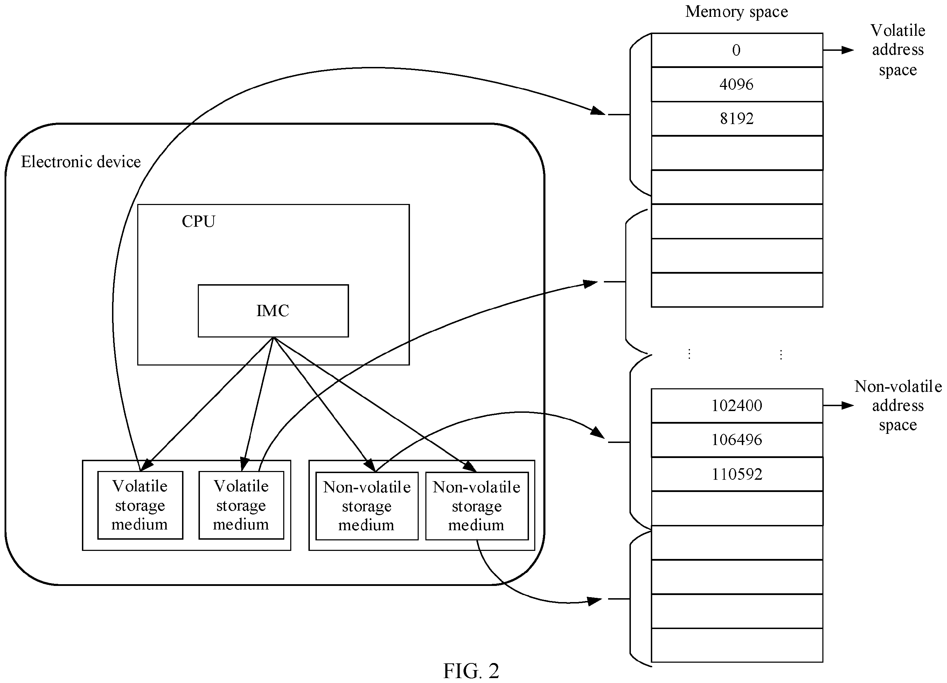

FIG. 2 is a schematic diagram of managing a storage medium in an application direct mode in the conventional technology. As shown in FIG. 2, in the application direct mode, both a volatile storage medium and a non-volatile storage medium are configured to provide memory spaces for an operating system. A memory space provided by the volatile storage medium includes a plurality of volatile address spaces, and a memory space provided by the non-volatile storage medium also includes a plurality of non-volatile address spaces. An IMC may perform uniform addressing on all address spaces in the volatile storage medium and the non-volatile storage medium by using a second virtual address interval. The second virtual address interval may include a plurality of second virtual addresses. The IMC may establish a mapping relationship between a physical address of each address space and a second virtual address, so that each address space corresponds to one second virtual address, to implement uniform addressing on all the address spaces in the volatile storage medium and the non-volatile storage medium. For example, in FIG. 2, three volatile address spaces of a volatile storage medium respectively correspond to second virtual addresses 0, 4096, and 8192, and three non-volatile address spaces of a non-volatile storage medium respectively correspond to second virtual addresses 102400, 106496, and 110592. The IMC may send the second virtual address with the mapping relationship to the operating system.

To improve flexibility of storage medium management, this application proposes a target virtual address interval including a plurality of target virtual addresses, and the target virtual address interval is used as a virtual address interval for implementing dynamic conversion. A controller in the electronic device may establish a mapping relationship between a physical address of an address space and a target virtual address, and sends the target virtual address with the mapping relationship to the operating system. The operating system manages the target virtual address, so that the address space corresponding to the target virtual address can be presented to an application served by the operating system. When a volatile address space provided for the operating system belongs to a cache, even if an operating mode of the hybrid memory is the memory mode, the volatile address space corresponding to the target virtual address may still be managed by the operating system, the target virtual address is visible to the operating system, and the operating system may access the target virtual address. When deleting the mapping relationship between the target virtual address and the physical address of the address space, the controller may restore, to the controller for management, the address space provided for the operating system.

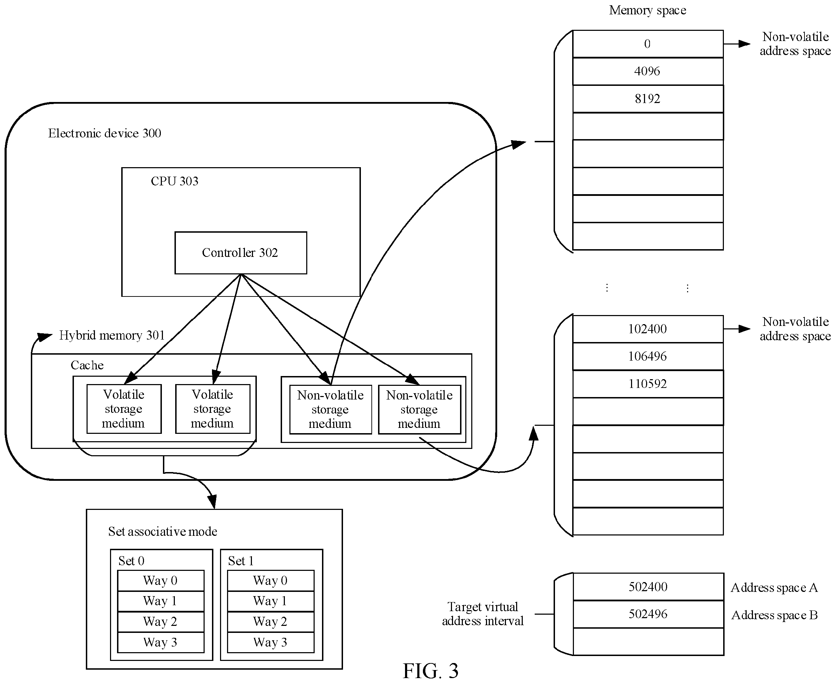

To further describe a hardware structure of a node device configured to manage a storage medium based on a target virtual address interval, refer to a schematic diagram of a structure of an electronic device according to an embodiment of this application in FIG. 3. The electronic device 300 includes a hybrid memory 301 and a controller 302. An operating system may be further installed in the electronic device 300. The operating system is system software responsible for supporting an application running environment and a user operating environment, and may be a disk operating system (disk operating system), a Microsoft (Windows) operating system, a Harmony (Harmony) operating system, or an Android (Android) operating system, or may be another operating system. An operating system used on the electronic device 300 is not specifically limited in this embodiment of this application. The electronic device 300 may be a server, or may be a terminal (for example, a mobile phone or a notebook computer). A form of the electronic device 300 is not specifically limited in this embodiment of this application.

The hybrid memory 301 may include two different types of storage media. Different types of storage media have different attributes. The attributes may be classified into a first attribute and a second attribute. The first attribute may be whether data is volatile, and the second attribute is used to indicate performance of a storage medium. The performance may be a data access speed. For example, the hybrid memory 301 in FIG. 3 includes a non-volatile storage medium and a volatile storage medium. The attributes of the storage media are not specifically limited in this embodiment of this application. In addition, in this embodiment of this application, an example in which the hybrid memory 301 includes a non-volatile storage medium and a volatile storage medium is used for description. The hybrid memory 301 may include at least one storage medium of a same type. For example, the hybrid memory 301 in FIG. 3 includes two non-volatile storage media and two volatile storage media. A quantity of storage media of a same type in the hybrid memory 301 is not specifically limited in this embodiment of this application. The volatile storage medium may be a dynamic random access memory (dynamic random access memory, DRAM), a double data rate synchronous dynamic random access memory (double data rate synchronous dynamic random access memory, DDRSDRAM), or another volatile memory. The volatile storage medium is not specifically limited in this embodiment of this application. The non-volatile storage medium may be a persistent memory module (persistent memory module, PMM), a storage class memory (storage class memory, SCM), a phase change memory (phase change memory, PCM), a magnetic random access memory (magnetic random access memory, MRAM), a resistive random access memory (resistive random access memory, ReRAM), or another non-volatile memory. The non-volatile storage medium is not specifically limited in this embodiment of this application. During initialization, the hybrid memory 301 may operate in a memory mode. The volatile storage medium in the hybrid memory 301 serves as a cache of the non-volatile storage medium, and the volatile storage medium is invisible to an operating system on the electronic device 300. However, the non-volatile storage medium in the hybrid memory 301 is visible to the operating system.

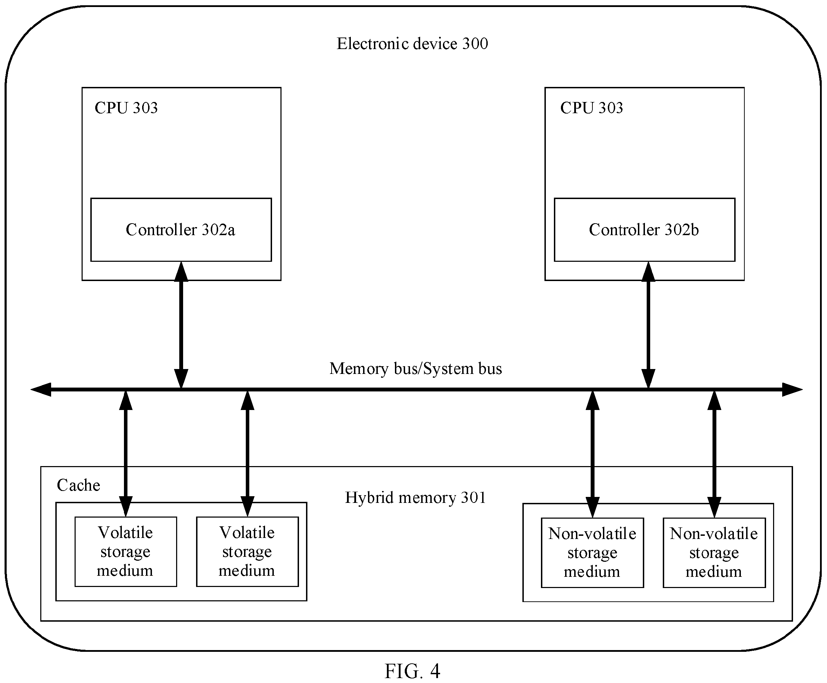

The controller 302 may be considered as a memory controller, and is configured to perform uniform addressing on a non-volatile storage address space in the non-volatile storage medium in the hybrid memory 301. The controller 302 may establish a mapping relationship between a physical address of each non-volatile address space in the non-volatile storage medium in the hybrid memory 301 and each first virtual address in a first virtual interval, so that each non-volatile address space corresponds to one first virtual address. For example, in FIG. 3, three non-volatile address spaces of a non-volatile storage medium respectively correspond to first virtual addresses 0, 4096, and 8192, and three non-volatile storage spaces of another non-volatile storage medium respectively correspond to first virtual addresses 102400, 106496, and 110592. The controller 302 may further generate a target virtual address interval, and the controller 302 may provide an address space for the operating system based on a requirement of the operating system and a target virtual address in the target virtual address interval, so that the operating system manages the address space provided by the controller 302. The address space provided for the operating system may belong to one or more storage media, or may belong to a same type of storage medium or different types of storage media. When the address space provided for the operating system includes a plurality of address spaces and the plurality of address spaces belong to one storage medium, the plurality of address spaces may or may not be adjacent to each other. In a possible implementation, for any address space provided by the controller 302, the controller 302 may establish a mapping relationship between a physical address of the address space and a target virtual address, and send the target virtual address corresponding to the address space to the operating system, so that the operating system manages the target virtual address corresponding to the address space, and therefore the operating system manages the address space. For example, in FIG. 3, the address space includes address spaces A and B, and the address spaces A and B respectively correspond to target virtual addresses 502400 and 502496. The controller 302 may be further connected to the volatile storage medium and the non-volatile storage medium in the hybrid memory 301 through a bus, and deliver instructions to the hybrid memory 301 through the bus, where the bus may be a memory bus or a system bus. The operating system may further request the controller 302 to restore an address space managed by the operating system. In this case, the controller 302 may delete, based on the request of the operating system, a mapping relationship between the to-be-restored address space and a target virtual address, to restore the to-be-restored address space to the controller 302 for management, so that the controller 302 manages the address space. It should be noted that, the electronic device 300 may include at least one controller 302. When the electronic device includes a plurality of controllers 302, each controller 302 may manage some storage media in the hybrid memory 301. For example, FIG. 4 is a schematic diagram of a structure of an electronic device according to an embodiment of this application. The electronic device 300 in FIG. 4 includes two controllers 302: a controller 302a and a controller 302b. The controller 302a is configured to manage the volatile storage medium in the hybrid memory 301, and the controller 302b is configured to manage the non-volatile storage medium in the hybrid memory 301.

It should be noted that, the first virtual address interval is a virtual address interval preset by the controller 302 in the memory mode for managing the non-volatile address space in the non-volatile storage medium in the hybrid memory 301. The target virtual address interval is a virtual address interval preset by the controller 302 for providing some or all of address spaces in the hybrid memory 301 in the memory mode for the operating system, and may be considered as a dynamically convertible address space. When the controller 302 provides all address spaces in the hybrid memory 301 for the operating system, in this case, the hybrid memory 301 is equivalent to operating in an application direct mode, so that the memory mode can be switched to the application direct mode.

The electronic device 300 may further include at least one CPU 303, configured to provide an instruction interface for an application or the operating system, and process data. The controller 302 may be deployed in the CPU 303 or outside the CPU 303.

It should be noted that the hybrid memory 301 may store at least one instruction, and the at least one instruction is loaded and executed by the CPU 303 to implement methods provided in the following method embodiments. Certainly, the electronic device 300 may further have components such as a wired or wireless network interface, a keyboard, and an input/output interface, to perform input and output. The electronic device 300 may further include another component configured to implement a device function. Details are not described herein again.

In an example embodiment, a computer-readable storage medium, for example, a memory including instructions, is further provided. The instructions may be executed by a processor in a terminal to perform a storage medium management method in the following embodiments. For example, the computer-readable storage medium may be a read-only memory (read-only memory, ROM), a random access memory (random access memory, RAM), a compact disc read-only memory (compact disc read-only memory, CD-ROM), a magnetic tape, a floppy disk, or an optical data storage device.

After the electronic device is powered on, the controller may initialize an operating mode of the hybrid memory. During the initialization, the controller may manage the volatile storage medium and the non-volatile storage medium in the hybrid memory in the memory mode. That is, during the initialization, the entire hybrid memory operates in the memory mode. Certainly, during the initialization, the controller may alternatively manage the volatile storage medium and the non-volatile storage medium in the memory in the application direct mode. It should be noted that, in this embodiment of this application, only the memory mode is used as an example for description. In the memory mode, the controller may establish a first mapping table. The first mapping table may be used to record a mapping relationship between each non-volatile address space in the non-volatile medium and a first virtual address in the memory mode. A mapping relationship between a non-volatile address space and a first virtual address may be a mapping relationship between a physical address of the non-volatile address space, a first virtual address, and a use identifier, or may be a mapping relationship between a physical address of the non-volatile address space, a first virtual address, a use identifier, and a memory mode identifier. The use identifier is used to indicate whether the non-volatile address space is used, and if the non-volatile address space is used, indicate an entity that uses the non-volatile address space and a type of data that the non-volatile address space is used to store. The memory mode identifier is used to indicate that the hybrid memory operates in the memory mode, and that all first virtual addresses in the first virtual address interval correspond to a non-volatile address space in the memory mode.

During the initialization, the controller may further generate a target virtual address interval, where the target virtual address interval includes a plurality of target virtual addresses, that is, target virtual addresses that are preset by the controller and that are to be subsequently directly managed by the operating system, to subsequently establish a mapping relationship between an address space directly managed by the operating system and a target virtual address. In this case, the hybrid memory in the electronic device operates in the memory mode. Considering that the volatile storage medium serves as a cache and is invisible to the operating system and the non-volatile storage medium is visible to the operating system in the memory mode, the controller may further send the first virtual address in the first mapping table to the operating system through a mapping relationship output interface, so that the operating system can manage the first virtual address sent by the controller to manage a memory space provided by the non-volatile storage medium. The controller may further send the target virtual address interval to the operating system through the mapping relationship output interface, to notify the operating system that the target virtual address interval is a dynamically convertible address space, and the controller may subsequently provide an address space for the operating system by using a target virtual address in the target virtual address space, so that the operating system manages the address space provided by the controller. Subsequently, when any target virtual address has a mapping relationship with an address space, the address space can be managed by the operating system. When the operating system is started, the operating system may store the first virtual address and the target virtual address interval that are sent by the controller for subsequent use. The mapping relationship output interface may be an e820 interface, or may be an interface that is newly defined by a person skilled in the art and that is configured to transmit and display a virtual address sent by the controller.

During the initialization, the controller may further set an address mapping between a volatile storage medium (namely, a cache) and a non-volatile storage medium. The address mapping is a rule or an algorithm for transferring data from the non-volatile storage medium to the cache. The address mapping set by the controller may include any one of a set associative (set associative) mode, a direct mapped (direct mapped) mode, and a fully associative (fully associative) mode. The set associative mode is also referred to as a set-set associative mode. The set associative mode is used as an example. The controller may divide a volatile address space in the cache into N sets (sets), where N is an integer greater than 0. Each set may include a plurality of ways (way), and each way corresponds to one cache line (cache line). Each way may be considered as a volatile address space. A length of the volatile address space may be 64 bytes (byte) or 4096 bytes. For example, in the set associative mode in FIG. 3, the cache includes a set 0 and a set 1, and the set 0 and the set 1 each include a way 0 to a way 03. A first virtual address in a non-volatile address space includes an address label (denoted as a t bit), a set index (denoted as an s bit), and an offset (denoted as a b bit) in a cache line, where the t bit is used to check whether the cache line is a target non-volatile address space to be accessed by the CPU, the s bit is used to determine a specific set, in the cache, to which the non-volatile address space is to be mapped to, and the b bit is used to determine an offset of the non-volatile address space in the cache line. The controller may determine, based on the s bit in the first virtual address in the non-volatile address space, a set corresponding to the non-volatile address space in the cache, where the non-volatile address space may correspond to a volatile address space in which any way in the set is located, so that data stored in that non-volatile address space may be stored to the corresponding volatile address space, and data stored in the volatile address space may also be written back to the non-volatile address space. That is, the non-volatile address space corresponds to a set in the cache, data in the non-volatile address space may be stored to any volatile address space in the set corresponding to the non-volatile address space, and data stored in a volatile address space in any set in the cache may also be written back to a non-volatile storage medium.

During the initialization, the controller may further set an eviction policy for a way in the cache. The eviction policy may be a least recently used (least recently used, LRU) policy or another policy. The eviction policy set by the controller is not specifically limited in this embodiment of this application.

It should be noted that a process performed by the controller during the initialization may be performed only once, and does not need to be repeatedly performed. In addition, a state table may be further set on the electronic device. The state table may be stored in a reserved address space in the volatile storage medium, or in a static random access memory (static random-access memory, SRAM) or an embedded DDR (embedded DDR, eDDR) in the CPU. The state table is used to store a state label of each volatile address space in the volatile storage medium. A state label of a volatile address space is used to indicate a state of the volatile address space. The state label of the volatile address space may include an address label and a state identifier. The state identifier is used to indicate a current state of the volatile address space. The state identifier may include an invalid identifier, a valid identifier, a lock identifier, and a lock-free identifier. The invalid identifier is used to indicate that the volatile address space is in an invalid state, and the invalid state is used to indicate that the volatile address space cannot be used as a cache space, that is, the volatile address space in the invalid state is invalid. The valid identifier is used to indicate that the volatile address space is in a valid state, and the valid state is used to indicate that the volatile address space can be used as a cache space, that is, the volatile address space in the valid state is valid. The lock identifier is used to indicate that the volatile address space is locked, and data stored in the volatile address space cannot be evicted. The lock-free identifier is used to indicate that the volatile address space is not locked, and data stored in the volatile address space can be evicted. In a possible implementation, the state identifier may include two bits (bit). In the two bits, a first bit is used to indicate whether the volatile address space is valid, and a second bit is used to indicate whether the volatile address space is locked, that is, the first bit is the invalid identifier or the valid identifier, and the second byte is the lock identifier or the lock-free identifier.

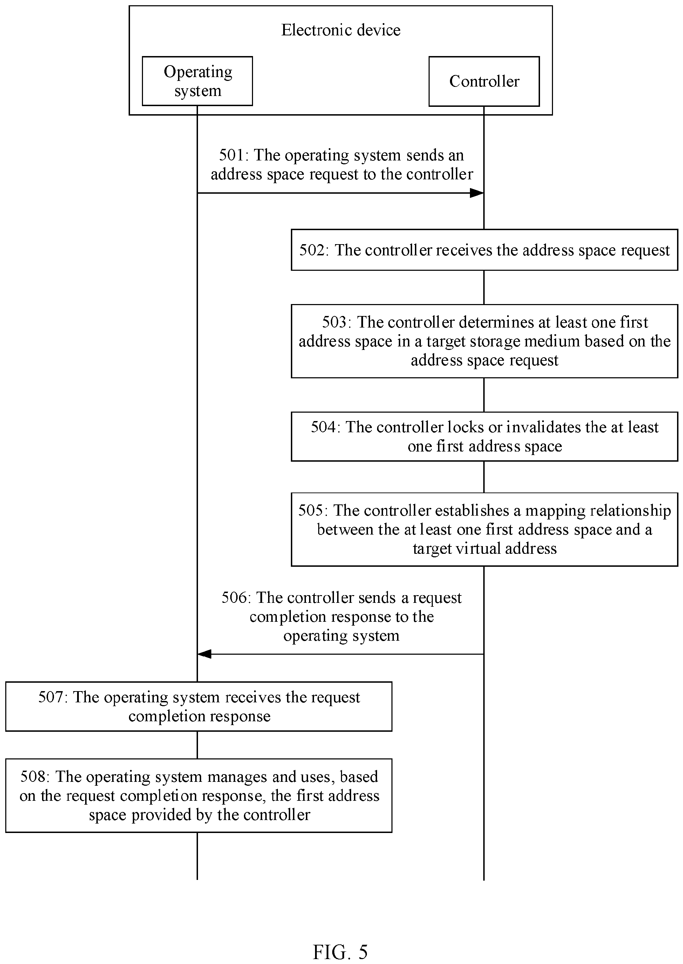

After the initialization is completed, the electronic device starts to operate. When the operating system on the electronic device performs a service, based on a service requirement, the operating system may require some address spaces that can be directly managed by the operating system, to store service data of the service, that is, the operating system requires address spaces operating in the application direct mode to store the service data. In this case, the electronic device may provide some or all of address spaces in the hybrid memory for the operating system based on the service requirement, so that the operating system directly manages and uses the address spaces. When the electronic device provides an address space for the operating system, the operating system and the controller of the electronic device may work collaboratively. To further describe the process, refer to a flowchart of a storage medium management method according to an embodiment of this application in FIG. 5. The method is applied to an electronic device. The electronic device includes a controller and two different types of storage media. The two different types of storage media may be considered as a hybrid memory.

501: An operating system sends an address space request to the controller, where the address space request is used to indicate to provide an address space in a target storage medium for the operating system, and the target storage medium is a storage medium that is in the two different types of storage media and that matches the address space request.

The address space request includes an attribute requirement and/or a data volume requirement of the operating system for a to-be-provided address space, where the attribute requirement is a requirement for an attribute of the to-be-provided address space, and the data volume requirement is a requirement for a data volume of to-be-stored data, that is, a requirement for a size of the to-be-provided address space. The attribute requirement and the data volume requirement may be determined by a service requirement of an application.

In a possible implementation, when a service requirement of any service performed by any application in the operating system has a very high requirement on performance of data storage, or when the service requirement indicates that the application requires a volatile medium or a non-volatile storage medium operating in an application direct mode to store service data of a target data volume, the operating system may determine the attribute requirement and the data volume requirement based on the service requirement. The attribute requirement is that a volatile address space in a volatile storage medium is required to store service data, or a non-volatile address space in a non-volatile storage medium is required to store service data. For example, the any service is an input/output service, and the service requirement of the service is that some volatile address spaces are required to serve as a high-speed input/output (input output, IO) cache to store I/O data. In this case, the operating system may determine, based on the service requirement, that the attribute requirement is that a volatile address space in a volatile storage medium is required to store service data.

When the service requirement explicitly specifies that service data of the target data volume needs to be stored, and a size of an address space provided by the controller for the operating system each time is not set, the data volume requirement in the address space request is the target data volume, and the address space request may further include a target quantity and/or target virtual addresses of a target quantity. The size of the address space provided by the controller for the operating system each time may be denoted as a preset to-be-provided space size, and the target quantity may be a quantity of address spaces that the operating system requests to be provided. The operating system may further determine the target quantity based on the target data volume and a size of a single address space. When the service requirement includes the target quantity, the operating system may further directly obtain the target quantity from the service requirement.

Because a target virtual address interval is stored in the operating system, the operating system may further search for unoccupied target virtual addresses in the target virtual address interval, select target virtual addresses of the target quantity from the unoccupied target virtual addresses, and add the target virtual addresses to the address space request. The unoccupied target virtual address is a target virtual address for which no mapping relationship has been established with an address space. The operating system may select smallest virtual addresses of the target quantity from the unoccupied target virtual addresses, and add the virtual addresses to the address space request. For example, if the unoccupied target virtual addresses include 10001 to 10005 and the target quantity is 2, the operating system may add the target virtual addresses 10001 and 10002 to the address space request.

When the service requirement explicitly specifies that service data of the target data volume needs to be stored, and the preset to-be-provided space size is set, the data volume requirement in the address space request is a data volume of data that can be stored in an address space of the preset to-be-provided space size. In this case, the address space request may alternatively not include a quantity requirement. The operating system may alternatively send a plurality of address space requests to the controller, so that the controller provides one address space for the operating system based on each address space request, so that a data volume of data that can be stored in address spaces provided in a plurality of times is the target data volume.

The address space request may further include a request identifier. The request identifier is used to request a provided address space, so that the operating system manages the provided address space. When the service requirement does not explicitly specify a size of a required address space and does not specify a requirement for an attribute of a to-be-provided address space, the address space request may include only a request identifier.

When the target storage medium meets the requirement in the address space request, the target storage medium matches the address space request. That the target storage medium matches the address space request means that the target storage medium meets the requirement, for example, the attribute requirement and/or the data volume requirement, for the to-be-provided address space in the address allocation request. In a possible implementation, when the attribute requirement is that a volatile address space in a volatile storage medium is required to store service data, and the data volume requirement is that service data of a target data volume needs to be stored, if a volatile storage medium in the hybrid memory includes an address space capable of storing data of the target data volume, the volatile storage medium matches the address space request. When the attribute requirement is that a non-volatile address space in a non-volatile storage medium is required to store service data, and the data volume requirement is that service data of a target data volume needs to be stored, if a non-volatile storage medium in the hybrid memory includes an address space capable of storing data of the target data volume, and a cache corresponding to the non-volatile storage medium includes an address space capable of storing data of the target data volume, the non-volatile storage medium matches the address space request. In a possible implementation, the address space request may further include a type identifier of the target storage medium, so that the controller may determine, based on a type of the target storage medium, a storage medium that is to provide an address space.

502: The controller receives the address space request.

503: The controller determines at least one first address space in the target storage medium based on the address space request.

The at least one first address space is an address space that operates in a memory mode and that is to be provided for the operating system, that is, a to-be-provided address space. The controller may first determine the target storage medium based on the address space request, use the target storage medium as a storage medium that is to provide an address space, and then determine the at least one first address space in the target storage medium based on the address space request.

A process of determining, by the controller, the target storage medium based on the address space request may be as follows: The controller determines, according to the attribute requirement and/or the data volume requirement in the address space request, the target storage medium in the two different types that matches the address space request; or the controller may directly determine, based on the type identifier of the target storage medium in the address space request, the target storage medium that is in the two different types of storage media and that matches the address space request.

A process of determining, by the controller, the at least one first address space in the target storage medium based on the address space request may be as follows: When the preset to-be-provided space size is set, the controller may select at least one address space from the target storage medium, where a total size of the at least one address space is less than or equal to the preset to-be-provided space size; and the controller may use each selected address space as a first address space.

When the preset to-be-provided space size is not set, if the data volume requirement included in the address space request is the target data volume, the controller may determine, based on the target data volume and the size of a single address space, that a quantity of to-be-provided address spaces is a target quantity. If the address space request includes the target quantity, the controller may obtain the target quantity from the address space request. After obtaining the target quantity, the controller may select address spaces of the target quantity from the target storage medium, and use each selected address space as a first address space.

In a possible implementation, the first address space may be alternatively determined based on a user instruction, the user instruction includes the at least one first virtual address, and the controller may determine, as a first address space, an address space corresponding to each first virtual address carried in the user instruction.

In a possible implementation, the controller may select address spaces of the target quantity from the target storage medium based on a selection condition. The selection condition may be that an unoccupied address space is preferably to be selected, and then an occupied address space is selected. The unoccupied address space may be an address space for which no mapping relationship has been established with a target virtual address. When the target storage medium is a volatile storage medium, selection may be performed based on sets of the volatile storage medium. For example, volatile address spaces with a same way number in each set of the volatile storage medium are selected. For example, a volatile address space in which a way 0 is located is selected from each set to form a first address space.

It should be noted that the process shown in this step is a process of determining, by the controller, the first address space in the target storage medium based on the address space request.

504: The controller locks or invalidates the at least one first address space.

When the target storage medium is a volatile storage medium, the first address space is a volatile address space. When the target storage medium is a non-volatile storage medium, the first address space is a non-volatile address space.

For any one of the at least one first address space, when the first address space is a volatile address space, the controller may perform an invalidation operation on the first address space to invalidate the first address space. That the controller performs an invalidation operation on any volatile address space may be performing an invalidation operation on a state label of the volatile address space. In a possible implementation, the controller may send an invalidation request to a state controller, where the invalidation request carries a space identifier of the volatile address space, and the space identifier may include a number of a set in which the volatile address space is located and a number of a way in which the volatile address space is located. The state controller receives the invalidation request, queries for the state label of the volatile address space in a state table based on the space identifier carried in the invalidation request. The state controller modifies a valid identifier, stored in the state label, of the volatile address space to an invalid identifier, to complete the invalidation operation on the volatile address space. The state controller is configured to manage the state table.

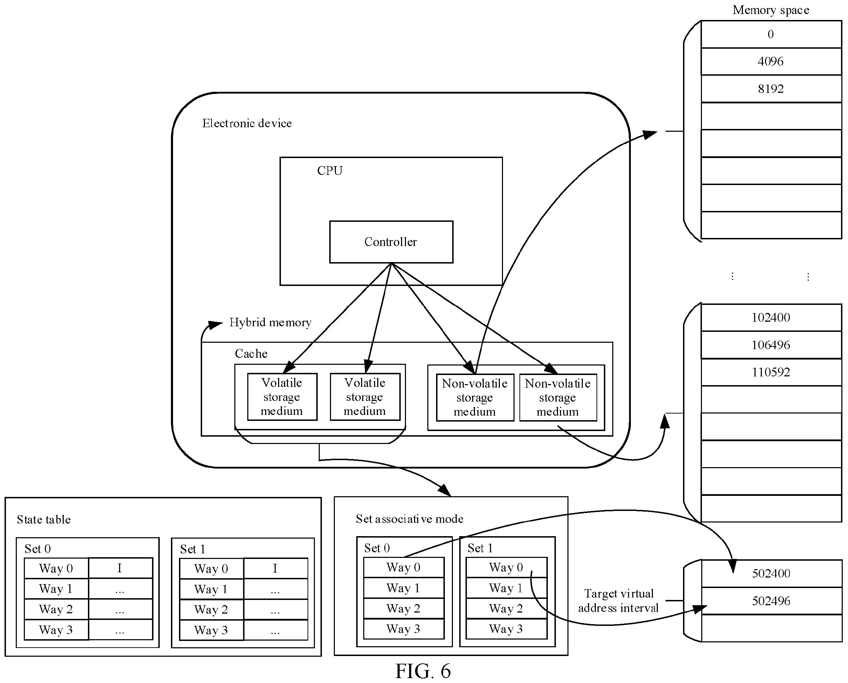

For example, FIG. 6 is a schematic diagram of providing, by a controller, a volatile address space for an operating system according to an embodiment of this application. In FIG. 6, for example, an address mapping between a volatile storage medium and a non-volatile storage medium is in a set associative mode, and the at least one first address space includes a volatile address space corresponding to a way 0 in a set 0 in a volatile storage medium and a volatile address space corresponding to a way 0 in a set 1 in the volatile storage medium. In this case, after the controller performs an invalidation operation on both the volatile address space corresponding to the way 0 in the set 0 and the volatile address space corresponding to the way 0 in the set 1, state identifiers in the state table that correspond to the way 0 in the set 0 and the way 0 in the set 1 each include an invalid identifier I.

When a state identifier of the volatile address space includes an invalid identifier, the volatile address space is in an invalid state in this case, that is, the volatile address space cannot be used as a cache space in this case. In this case, when a CPU accesses the cache, the volatile address space in the invalid state is inaccessible. In addition, before performing an invalidation operation on the volatile address space, the controller may first trigger the volatile address space to perform a write back (write back) operation to write data stored in the volatile address space back to the non-volatile storage medium. Therefore, it can be ensured that the data stored in the volatile address space is not lost. Then the controller performs an invalidation operation on the volatile address space.

It should be noted that, when the first address space is a volatile address space, the controller may invalidate the volatile address space based on a modified exclusive shared invalidate (modified exclusive shared invalidate, MESI) protocol. In a possible implementation, the controller may modify, based on the MESI protocol, a state identifier of the first address space to a target invalid identifier and a lock identifier. The target invalid identifier is an identifier for indicating invalidity in the MESI protocol, to indicate that data in the volatile address space is invalid, and trigger the data in the volatile address space to be written back to the non-volatile storage medium. When the state identifier of the first address space includes the target invalid identifier and the lock identifier, it is considered that the volatile address space cannot be used as a cache space in this case and the volatile address space is in an invalid state, that is, the target invalid identifier and the lock identifier are jointly used to indicate an invalid identifier

When the first address space is a non-volatile storage space, the controller locks the first address space. A process of locking the first address space by the controller may be implemented by the following steps 504A to 504C.

Step 504A: For any one of the at least one first address space, when the first address space is a non-volatile address space, the controller determines, based on a physical address of the first address space, a second address space corresponding to the first address space, where the second address space belongs to a cache of the target storage medium.

The controller may determine, based on an address mapping between a volatile storage medium and a non-volatile storage medium and the physical address of the non-volatile address space, a volatile address space corresponding to the non-volatile address space, where the volatile address space corresponding to the non-volatile address space is the second address space.

When the address mapping between a volatile storage medium and a non-volatile storage medium is in a set associative mode, a process of determining, by the controller based on the physical address of the non-volatile address space, the volatile address space corresponding to the non-volatile address space may be as follows: The controller determines searches a first mapping table to determine a first virtual address corresponding to the physical address of the non-volatile address space; the controller may determine, based on an s bit in the first virtual address of the non-volatile address space, a set, in the cache, that corresponds to the non-volatile address space; and the controller may select, based on a target selection mechanism, a way from the set to correspond to the non-volatile address space, where the selected way is used to store data that is stored in the non-volatile address space, and the selected way is the volatile address space corresponding to the non-volatile address space.

The target selection mechanism is used to select a target volatile address space from a set, and the target volatile address space is used to store data that is stored in the to-be-provided non-volatile address space, so that the controller establishes a correspondence between the selected target volatile address space and the to-be-provided non-volatile address space. The second address space is the target volatile address space selected by the controller for the first address space. The target selection mechanism may be using a target way in a set as a target volatile address space, where the target way may be a way 0. Content of the target selection mechanism is not specifically limited in this embodiment of this application.

Step 504B: The controller transfers data stored in the first address space to the second address space.

The controller may transfer data currently stored in the first address space to the second address space, to avoid loss of the data stored in the first address space.

It should be noted that, before performing step 504B, the controller may further trigger the cache to perform a write back operation, to write the latest data in the cache back to the non-volatile storage medium, so that data currently stored in the non-volatile storage medium is the latest data. Then step 504B is performed, so that all data stored in the second address space is the latest data. In a possible implementation, if the cache of the target storage medium further includes another address space, different from the second address space, that corresponds to the first address space, and the another address space is not an address space selected based on the target selection mechanism, the controller may trigger data stored in the another address space to be written back to the first address space, and then transfer the data written back to the first address space to the second address space, so that all data stored in the second address space is the latest data. For example, if the second address space is a way 0 in a selected set 0 and the first address space currently corresponds to a way 1 in the set 0, data stored in the way 1 in the set 0 may be written back to the first address space first, and then the data written back to the first address space is transferred to the way 0 in the set 0.

Step 504C: After the transfer is completed, the controller locks the second address space.

That the controller locks the second address space may be locking a state label of the second address space. In a possible implementation, when the second address space is a volatile address space, the controller may send a lock request to the state controller, where the lock request carries a space identifier of the volatile address space; the state controller receives the lock request, and queries for the state label of the volatile address space in the state table based on the space identifier carried in the lock request. The state controller modifies a lock-free identifier in a state identifier stored in the state label to a lock identifier, to lock the volatile address space. In this case, the state identifier of the volatile address space includes the lock identifier, and the volatile address space is in a locked state. The state identifier of the volatile address space may further include a valid identifier, to indicate that the volatile address space can be used as a cache space, but data stored in the volatile address space cannot be evicted.

For any volatile address space used as a cache space, the CPU in the electronic device may access the volatile address space to obtain data required by the CPU. When the volatile address space does not store the data required by the CPU, the CPU continues to access the non-volatile storage medium, obtains the data required by the CPU from the non-volatile storage medium, and stores the obtained data to the cache for subsequent use. However, when the volatile address space has a lock identifier, the volatile address space has been locked. In this case, data in the volatile address space cannot be evicted. For the CPU, there is data in the volatile address space, but the stored data cannot be evicted. In this case, the CPU does not access the non-volatile storage medium, so that the CPU can be prevented from accessing the first address space in the non-volatile storage medium. In this case, the first address space is equivalent to being idle in the memory mode, so that the operating system can subsequently directly manage and use the first address space.

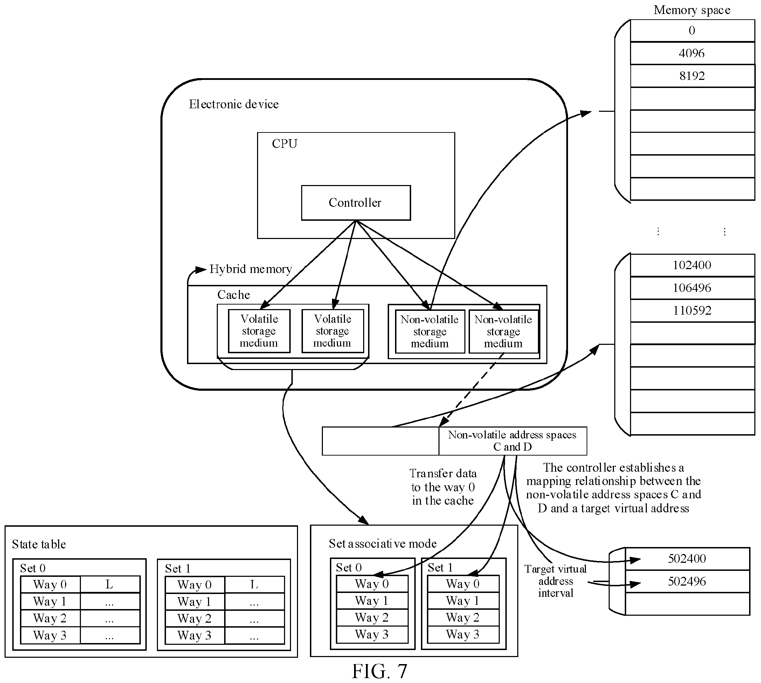

For example, FIG. 7 is a schematic diagram of providing, by a controller, a volatile address space for an operating system according to an embodiment of this application. In FIG. 7, for example, an address mapping between a volatile storage medium and a non-volatile storage medium is in a set associate mode, and the first address space includes non-volatile address spaces C and D. The controller determines, based on physical addresses of the non-volatile address spaces C and D, first virtual addresses corresponding to the physical addresses of the non-volatile address spaces C and D. Then the controller may determine, based on the first virtual addresses of the non-volatile address spaces C and D and the set associative mode, that the non-volatile address spaces C and D respectively correspond to a set 0 and a set 1 in a volatile storage medium. The controller may select a way 0 in the set 0 as a target volatile address space for storing data in the non-volatile address space C, and may also select a way 0 in the set 1 as a target volatile address space for data in the non-volatile address space D. The controller transfers the data stored in the non-volatile address spaces C and D to a volatile address space corresponding to the way 0 in the set 0 and a volatile address space corresponding to the way 0 in the set 1, respectively, and modifies lock-free identifiers in the state table, that corresponds to the way 0 in the set 0 and the way 0 in the set 1 to a lock identifier L.

505: The controller establishes a mapping relationship between the at least one first address space and a target virtual address, where the target virtual address is managed by the operating system.

For any one of the at least one first address space, a process of establishing, by the controller, the mapping relationship between the first address space and the target virtual address may be as follows: The controller may establish a mapping relationship between the physical address of the first address space, a target virtual address, and a target identifier, where the target identifier is used to indicate that the target virtual address is managed by the operating system. The controller may further store the established mapping relationship between the first address space and the target virtual address to a second mapping table. After the controller establishes the mapping relationship between the first address space and the target virtual address, the first address space can be managed by the operating system. The second mapping table is used to store a mapping relationship between a target virtual address and an address space, and the target virtual address in the second mapping table is managed by the operating system.

After the controller establishes the relationship between the at least one first address space and the target virtual address, the at least one address space corresponds to at least one target virtual address, where one first address space corresponds to one target virtual address. For example, in FIG. 6, the at least one first address space includes the volatile address space corresponding to the way 0 in the set 0 and the volatile address space corresponding to the way 0 in the set 1, where the volatile address space corresponding to the way 0 in the set 0 corresponds to a target virtual address 502400, and the volatile address space corresponding to the way 0 in the set 1 corresponds to a target virtual address 502496. For another example, in FIG. 7, the at least one first address space includes the non-volatile address space C and the non-volatile address space D, and the controller establishes a mapping relationship between the non-volatile address spaces C and D and target virtual addresses, where the non-volatile address space C corresponds to a target virtual address 502400, and the non-volatile address space D corresponds to a target virtual address 502496.

Before performing step 505, the controller may further determine at least one target virtual address used to establish a mapping relationship with the at least one first address space. In a possible implementation, when the address space request received by the controller carries target virtual address of the target quantity, the controller may obtain the target virtual addresses of the target quantity from the address space, and establish a relationship between the first address space and the target virtual addresses of the target quantity.

In a possible implementation, when the address space request received by the controller does not carry target virtual addresses of the target quantity, the controller may search for unoccupied target virtual addresses in the target virtual address interval, and select target virtual addresses of the target quantity from the unoccupied target virtual addresses to establish a mapping relationship with the at least one first address space. The controller may establish a mapping relationship between smallest virtual addresses of the target quantity in the unoccupied target virtual addresses and the at least one first address space, to implement sequential mapping.

It should be noted that the process shown in step 505 is a process of mapping, by the controller, the physical address of the first address space to the target virtual address. After the controller maps the physical address of the first address space to the target virtual address, it can indicate that the controller has allocated the first address space to the operating system. In this case, the controller has no management right on the first address space.

In a possible implementation, the controller may send the target virtual address with the mapping relationship to the operating system, so that the operating system manages the target virtual address with the mapping relationship. For the process, refer to steps 506 to 508.

506: The controller sends a request completion response to the operating system, where the request completion response is used to indicate that the controller has provided the first address space for the operating system.

The request completion response may include the target virtual address corresponding to the at least one first address space and a success identifier. The success identifier is used to indicate that the controller has provided the first address space for the operating system.

507: The operating system receives the request completion response.

508: The operating system manages and uses, based on the request completion response, the first address space provided by the controller.

After the operating system receives the request completion response, the operating system may store the target virtual address that corresponds to the at least one first address space and that is carried in the request completion response, so that the operating system can subsequently manage the target virtual address corresponding to the at least one first address space. For example, the operating system may use the at least one first address space as a high-speed I/O cache based on the target virtual address corresponding to the at least one first address space.

The operating system may present the target virtual address provided by the controller to a kernel of the operating system. Then the kernel allocates, to a specific application, the target virtual address presented by the operating system, so that the specific application uses the first address space by using the target virtual address. The specific application may be an application that imposes an attribute requirement to the operating system. A process of using the first address space by the specific application may be as follows: When the first address space is a non-volatile address space, the specific application may directly access the first address space based on the target virtual address corresponding to the first address space, or may indirectly access the first address space by using the kernel based on the target virtual address corresponding to the first address space. When the first address space is a volatile address space, the specific application may indirectly access the first address space by using the kernel based on the target virtual address corresponding to the first address space. That the specific application indirectly accesses the first address space by using the kernel based on the target virtual address corresponding to the first address space means that the kernel accesses the first address space in place of the application.

In the method provided in this embodiment of this application, the controller receives the address space request, and provides the first address space requested by the address space request for the operating system, so that the first address space is directly managed by the operating system, without manual configuration or restart of the electronic device, to improve flexibility of storage medium management. In addition, when the first address space is a volatile address space, the first address space may be invalidated to trigger data stored in the first address space to be written back to a non-volatile storage medium, to avoid loss of the data stored in the first address space. In addition, when the first address space is a non-volatile address space, data stored in the first address space is transferred to a volatile storage medium, to avoid loss of the data stored in the first address space. In addition, that the controller provides the first address space for the operating system is equivalent to that the first address space operates in the application direct mode, so that the application direct mode and the memory mode can coexist on the electronic device, and respective advantages of the two operating modes can be maintained on the electronic device. In addition, after the controller provides the first address space for the operating system, the first address space is equivalent to operating in the application direct mode, so that the CPU can directly access the first address space without first accessing the cache. Therefore, an access delay of accessing the first address space by the CPU each time is stable and can be expected.

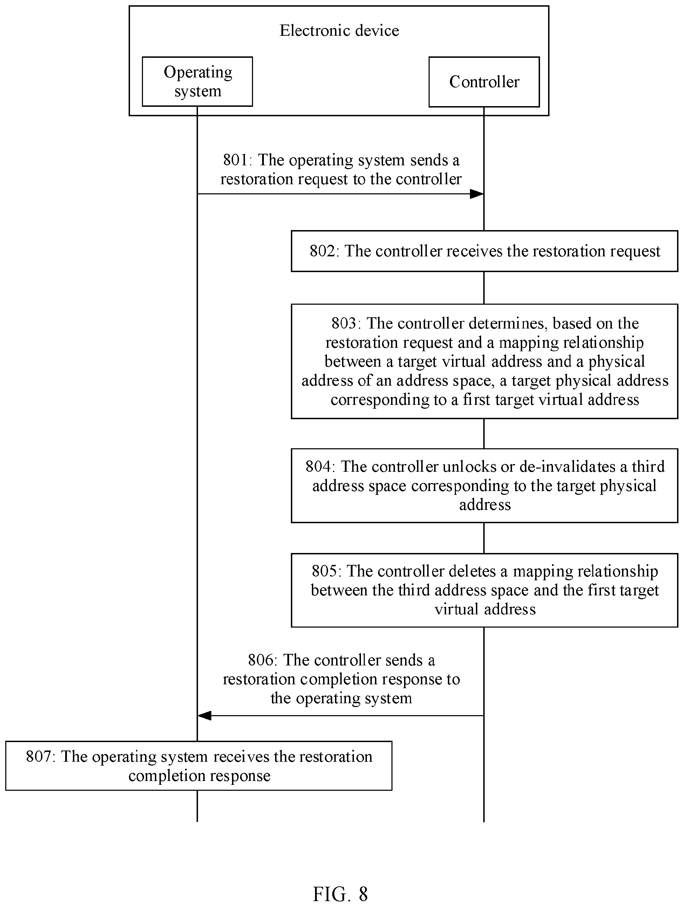

The electronic device may alternatively restore, to the controller for management, some or all of address spaces managed by the operating system. Alternatively, the process may be jointly performed by the operating system, the controller, and a second controller. To further describe the process, refer to a flowchart of a storage medium management method according to an embodiment of this application in FIG. 8. The method is applied to an electronic device. The electronic device includes a controller and two different types of storage media. The two different types of storage media may be considered as a hybrid memory.

801: An operating system sends a restoration request to the controller, where the restoration request is used to indicate to restore, to the controller for management, an address space that corresponds to a first target virtual address and that is managed by the operating system.

The first target virtual address is a target virtual address corresponding to a to-be-restored address space, and the address space that the operating system requests to be restored may be some or all of address spaces managed by the operating system. Herein, in this embodiment of this application, that the operating system requests to restore only a management right on the address space corresponding to the first target virtual address is used as an example for description.

When any service performed by any application in the operating system is completed and the operating system no longer uses the address space corresponding to the first target virtual address to store service data of the service, or when the operating system does not frequently use the address space corresponding to the first target virtual address, the operating system may send the restoration request to the controller, to request to restore the management right on the address space corresponding to the first target virtual address.

802: The controller receives the restoration request.

803: The controller determines, based on the restoration request and a mapping relationship between a target virtual address and a physical address of an address space, a target physical address corresponding to the first target virtual address.

The target physical address is a physical address of the to-be-restored address space. The controller may obtain the first target virtual address from the restoration request, and determine, from a second mapping table, the target physical address corresponding to the first target virtual address.

804: The controller unlocks or de-invalidates a third address space corresponding to the target physical address.

The third address space is an address space corresponding to the target physical address, that is, an address space that currently requests to be restored.

When the third address space is a volatile address space, the controller de-invalidates the third address space. A process of de-invalidating, by the controller, the third address space is a process of performing, by the controller, a de-invalidation operation on the third address space. In a possible implementation, that the controller performs a de-invalidation operation on a volatile address space may be performing a de-invalidation operation on a state label of the volatile address space. In a possible implementation, the controller may send a de-invalidation request to a state controller, where the de-invalidation request carries a space identifier of the volatile address space. The state controller receives the de-invalidation request, queries the state label of the volatile address space in a state table based on the identifier carried in the de-invalidation request, and modifies an invalid identifier of the volatile address space to a valid identifier. In this case, the volatile address space may be used as a cache space.

When the invalid identifier is jointly indicated by a target invalid identifier and a lock identifier, the controller may send an unlock request to the state controller, where the unlock request carries the space identifier of the volatile address space. The state controller receives the unlock request, queries for the state label of the volatile address space in the state table based on the space identifier carried in the unlock request, and modifies the lock identifier in the state label to a lock-free identifier, so that the state label of the volatile address space includes only the target invalid identifier. The target invalid identifier can only indicate that data in the volatile address space is invalid, but cannot indicate that the volatile address space cannot be used as a cache space, to de-invalidate the volatile address space.

When the third address space is a non-volatile address space, the controller unlocks the third address space. A process of unlocking, by the controller, the third address space may be implemented by the following steps 8041 and 8042.

Step 8041: When the third address space is a non-volatile address space, the controller determines, based on a physical address of the third address space, a fourth address space corresponding to the third address space, where the fourth address space belongs to a cache of a storage medium in which the third address space is located.

The controller may determine, based on an address mapping between a volatile storage medium and a non-volatile storage medium and the physical address of the third address space, the fourth address space that corresponds to the third address space and that is in the cache of the storage medium in which the third address space is located. A process of determining, by the controller based on the address mapping between a volatile storage medium and a non-volatile storage medium and the physical address of the non-volatile address space, a volatile address space corresponding to the non-volatile address space is described in step 504A. Herein, step 8041 is not described in detail in this embodiment of this application.

Step 8042: The controller unlocks the fourth address space.

A process of unlocking any volatile address space by the controller may be as follows: The controller may send an unlock request to the state controller, where the unlock request carries a space identifier of the volatile address space; the state controller receives the unlock request, and queries a state label of the volatile address space in the state table based on the space identifier carried in the unlock request; and the state controller modifies a lock identifier in the state label to a lock-free identifier, to complete unlocking. After the volatile address space is unlocked, data in the volatile address space may be evicted, or data in the volatile address space may be written back to a non-volatile address space corresponding to the volatile address space, to remove locking of the volatile address space.

805: The controller deletes a mapping relationship between the third address space and the first target virtual address.

The controller may delete the mapping relationship between the third address space and the first target virtual address from the second mapping table, to indicate that the third address space has been restored to the controller for management. In this case, the third address space can be managed by the controller but cannot be managed by the operating system.

806: The controller sends a restoration completion response to the operating system, where the restoration completion response is used to indicate that the address space corresponding to the first target virtual address has been restored to the controller for management.

807: The operating system receives the restoration completion response.

When receiving the restoration completion response, the operating system may delete the stored first target virtual address, so that the third address space corresponding to the first target virtual address is invisible to the operating system, to prevent the operating system from subsequently managing or using the third address space.

In the method provided in this embodiment of this application, the controller receives the restoration request, and deletes the mapping relationship between the target physical address and the first target virtual address based on the restoration request, to restore, to the controller for management, an address space corresponding to the target physical address, without manual configuration or restart of the electronic device, to improve flexibility of storage medium management.

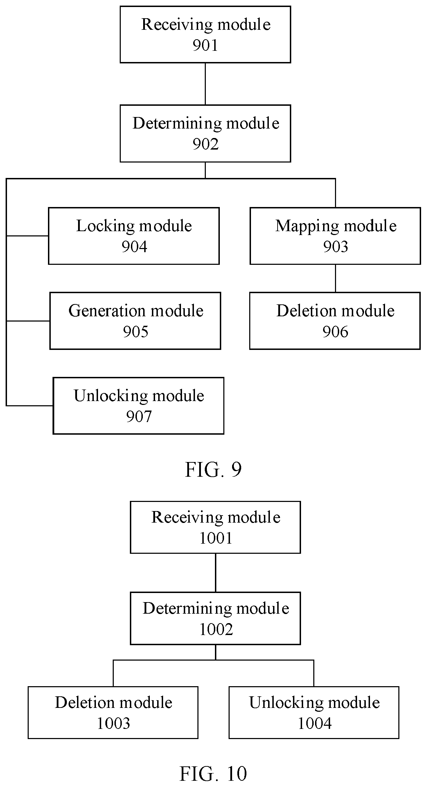

FIG. 9 is a schematic diagram of a structure of a storage medium management apparatus according to an embodiment of this application. The apparatus 900 includes:
a receiving module 901, configured to receive an address space request, where the address space request is used to indicate to provide an address space in a target storage medium for an operating system, and the target storage medium is a storage medium in two different types that matches the address space request;
a determining module 902, configured to determine a first address space in the target storage medium based on the address space request; and
a mapping module 903, configured to map a physical address of the first address space to a target virtual address, where the target virtual address is managed by the operating system.

Optionally, the apparatus 900 further includes:
a locking module 904, configured to lock or invalidate the first address space.

Optionally, the locking module 904 is configured to:
when the first address space is a volatile address space, perform an invalidation operation on the first address space.

Optionally, the locking module 904 is configured to:
when the first address space is a non-volatile address space, determine, based on the physical address of the first address space, a second address space corresponding to the first address space, where the second address space belongs to a cache of the target storage medium;
transfer data stored in the first address space to the second address space; and
lock the second address space after the transfer is completed.

Optionally, the mapping module 903 is configured to:
establish a mapping relationship between the physical address of the first address space, the target virtual address, and a target identifier, where the target identifier is used to indicate that the target virtual address is managed by the operating system.

Optionally, the apparatus 900 further includes:
a generation module 905, configured to generate a target virtual address interval, where the target virtual address interval includes a plurality of target virtual addresses.

Optionally, the apparatus 900 further includes a deletion module 906, where
the receiving module 901 is further configured to receive a restoration request, where the restoration request is used to indicate to restore, to the controller for management, an address space that corresponds to the first target virtual address and that is managed by the operating system, and the address space is located in at least one of the different types of storage media;
the determining module 902 is further configured to determine, based on the restoration request and a mapping relationship between a target virtual address and a physical address of an address space, a target physical address corresponding to the first target virtual address; and
the deletion module 906 is configured to delete a mapping relationship between the target physical address and the first target virtual address.

Optionally, the apparatus 900 further includes:
an unlocking module 907, configured to unlock or de-invalidate a third address space corresponding to the target physical address.

Optionally, the unlocking module 907 is configured to:
when the third address space is a volatile address space, perform a de-invalidation operation on the third address space.

Optionally, the unlocking module 907 is configured to:
when the third address space is a non-volatile address space, determine, based on a physical address of the third address space, a fourth address space corresponding to the third address space, where the fourth address space belongs to a cache of a storage medium in which the third address space is located; and
unlock the fourth address space.

Optionally, the address space request includes an attribute requirement and/or a data volume requirement of the operating system for a to-be-provided address space; and when the target storage medium meets the requirement in the address space request, the target storage medium matches the address space request.

In the apparatus, the controller receives the address space request, and provides the first address space requested by the address space request for the operating system, so that the first address space is directly managed by the operating system, without manual configuration or restart of the electronic device, to improve flexibility of storage medium management.

FIG. 10 is a schematic diagram of a structure of a storage medium management apparatus according to an embodiment of this application. The apparatus 1000 includes:
a receiving module 1001, configured to receive a restoration request, where the restoration request is used to indicate to restore, to a controller for management, an address space that corresponds to a first target virtual address and that is managed by an operating system, and the address space is located in at least one of different types of storage media;
a determining module 1002, configured to determine, based on the restoration request and a mapping relationship between a target virtual address and a physical address of an address space, a target physical address corresponding to the first target virtual address; and
a deletion module 1003, configured to delete a mapping relationship between the target physical address and the first target virtual address.

Optionally, the control module further includes:
an unlocking module 1004, configured to unlock or de-invalidate a third address space corresponding to the target physical address.

Optionally, the unlocking module 1004 is configured to:
when the third address space is a volatile address space, perform a de-invalidation operation on the third address space.

In a possible implementation, the unlocking module 1004 is configured to:
when the third address space is a non-volatile address space, determine, based on a physical address of the third address space, a fourth address space corresponding to the third address space, where the fourth address space belongs to a cache of a storage medium in which the third address space is located; and
unlock the fourth address space.

In the apparatus, the controller receives the restoration request, and deletes the mapping relationship between the target physical address and the first target virtual address based on the restoration request, to restore, to the controller for management, an address space corresponding to the target physical address, without manual configuration or restart of the electronic device, to improve flexibility of storage medium management.

All of the foregoing optional technical solutions may form optional embodiments of this disclosure through any combination. Details are not described herein again.

It should be noted that, when the storage medium management apparatus provided in the foregoing embodiments manages a storage medium, the division of the foregoing function modules is merely used as an example for description. In actual application, the foregoing functions may be allocated to and performed by different function modules as required. To be specific, an inner structure of the apparatus is divided into different function modules to perform all or some of the foregoing functions. In addition, the storage medium management method embodiments provided in the foregoing embodiments belong to a same concept. For details about a specific implementation process of the storage medium management apparatus, refer to the method embodiments. Details are not described herein again.

A person of ordinary skill in the art may understand that all or some of the steps of the foregoing embodiments may be implemented by hardware or a program instructing related hardware. The program may be stored in a computer-readable storage medium. The storage medium may be a read-only memory, a magnetic disk, an optical disc, or the like.

The foregoing descriptions are merely optional embodiments of this application, but are not intended to limit this application. Any modification, equivalent replacement, or improvement made without departing from the spirit and principle of this application should fall within the protection scope of this application.

## Claims

1. A storage medium management method, applied to an electronic device, wherein the electronic device comprises a controller and two different types of storage media, and the method comprises:
receiving, by the controller, an address space request, wherein the address space request is used to indicate to provide an address space in a target storage medium for an operating system, and the target storage medium is a storage medium that is in the two different types of storage media and that matches the address space request;
determining, by the controller, a first address space in the target storage medium based on the address space request; and
mapping, by the controller, a physical address of the first address space to a target virtual address, wherein the target virtual address is managed by the operating system.

2. The method according to claim 1, wherein before the mapping, by the controller, a physical address of the first address space to a target virtual address, the method further comprises:
locking or invalidating, by the controller, the first address space.

3. The method according to claim 2, wherein the invalidating, by the controller, the first address space comprises:
when the first address space is a volatile address space, performing an invalidation operation on the first address space.

4. The method according to claim 2, wherein the locking, by the controller, the first address space comprises:
when the first address space is a non-volatile address space, determining, based on the physical address of the first address space, a second address space corresponding to the first address space, wherein the second address space belongs to a cache of the target storage medium;
transferring data stored in the first address space to the second address space; and
locking the second address space after the transfer is completed.

5. The method according to claim 1, wherein the mapping, by the controller, a physical address of the first address space to a target virtual address comprises:
establishing a mapping relationship between the physical address of the first address space, the target virtual address, and a target identifier, wherein the target identifier is used to indicate that the target virtual address is managed by the operating system.

6. The method according to any one of claims 1 to 4, wherein before the receiving, by the controller, an address space request, the method further comprises:
generating, by the controller, a target virtual address interval, wherein the target virtual address interval comprises a plurality of target virtual addresses.

7. The method according to claim 1, wherein the method further comprises:
receiving, by the controller, a restoration request, wherein the restoration request is used to indicate to restore, to the controller for management, an address space that corresponds to a first target virtual address and that is managed by the operating system, and the address space is located in at least one of the different types of storage media;
determining, by the controller based on the restoration request and a mapping relationship between a target virtual address and a physical address of an address space, a target physical address corresponding to the first target virtual address; and
deleting, by the controller, a mapping relationship between the target physical address and the first target virtual address.

8. The method according to claim 7, wherein before the deleting, by the controller, a mapping relationship between the target physical address and the first target virtual address, the method further comprises:
unlocking or de-invalidating, by the controller, a third address space corresponding to the target physical address.

9. The method according to claim 8, wherein the de-invalidating, by the controller, a third address space corresponding to the target physical address comprises:
when the third address space is a volatile address space, performing a de-invalidation operation on the third address space.

10. The method according to claim 8, wherein the unlocking, by the controller, a third address space corresponding to the target physical address comprises:
when the third address space is a non-volatile address space, determining, based on a physical address of the third address space, a fourth address space corresponding to the third address space, wherein the fourth address space belongs to a cache of a storage medium in which the third address space is located; and
unlocking the fourth address space.

11. The method according to any one of claims 1 to 10, wherein the address space request comprises an attribute requirement and/or a data volume requirement of the operating system for a to-be-provided address space, and when the target storage medium meets the requirement in the address space request, the target storage medium matches the address space request.

12. A storage medium management apparatus, wherein the apparatus comprises:
a receiving module, configured to receive an address space request, wherein the address space request is used to indicate to provide an address space in a target storage medium for an operating system, and the target storage medium is a storage medium that is in two different types of storage media and that matches the address space request;
a determining module, configured to determine a first address space in the target storage medium based on the address space request; and
a mapping module, configured to map a physical address of the first address space to a target virtual address, wherein the target virtual address is managed by the operating system.

13. The apparatus according to claim 12, wherein the apparatus further comprises:
a locking module, configured to lock or invalidate the first address space.

14. The apparatus according to claim 13, wherein the locking module is configured to:
when the first address space is a volatile address space, perform an invalidation operation on the first address space

15. The apparatus according to claim 13, wherein the locking module is configured to:
when the first address space is a non-volatile address space, determine, based on the physical address of the first address space, a second address space corresponding to the first address space, wherein the second address space belongs to a cache of the target storage medium;
transfer data stored in the first address space to the second address space; and
lock the second address space after the transfer is completed.

16. The apparatus according to claim 12, wherein the mapping module is configured to:
establish a mapping relationship between the physical address of the first address space, the target virtual address, and a target identifier, wherein the target identifier is used to indicate that the target virtual address is managed by the operating system.

17. The apparatus according to any one of claims 12 to 15, wherein the apparatus further comprises:
a generation module, configured to generate a target virtual address space, wherein the target virtual address space comprises a plurality of target virtual addresses.

18. The apparatus according to claim 12, wherein the control apparatus further comprises a deletion module;
the receiving module is further configured to receive a restoration request, wherein the restoration request is used to indicate to restore, to a controller for management, an address space that corresponds to a first target virtual address and that is managed by the operating system, and the address space is located in at least one of the different types of storage media;
the determining module is further configured to determine, based on the restoration request and a mapping relationship between a target virtual address and a physical address of an address space, a target physical address corresponding to the first target virtual address; and
the deletion module is configured to delete a mapping relationship between the target physical address and the first target virtual address.

19. The apparatus according to claim 18, wherein the apparatus further comprises:
an unlocking module, configured to unlock or de-invalidate a third address space corresponding to the target physical address.

20. The apparatus according to claim 19, wherein the unlocking module is configured to:
when the third address space is a volatile address space, perform a de-invalidation operation on the third address space

21. The apparatus according to claim 19, wherein the unlocking module is configured to:
when the third address space is a non-volatile address space, determine, based on a physical address of the third address space, a fourth address space corresponding to the third address space, wherein the fourth address space belongs to a cache of a storage medium in which the third address space is located; and
unlock the fourth address space.

22. The apparatus according to any one of claims 12 to 21, wherein the address space request comprises an attribute requirement and/or a data volume requirement of the operating system for a to-be-provided address space, and when the target storage medium meets the requirement in the address space request, the target storage medium matches the address space request.

23. An electronic device, wherein the electronic device comprises a processor and a memory, the memory stores at least one instruction, and the instruction is loaded and executed by the processor to implement an operation performed in the storage medium management method according to any one of claims 1 to 11.

24. A computer-readable storage medium, wherein the storage medium stores at least one instruction, and the instruction is loaded and executed by a processor to implement an operation performed in the storage medium management method according to any one of claims 1 to 11.
